# EUROPÄISCHE PATENTSCHRIFT

(11) **EP 0 902 256 B1**
(45) Veröffentlichungstag und Bekanntmachung des Hinweises auf die Patenterteilung: **07.06.2006**
(21) Anmeldenummer: 98113081.8
(22) Anmeldetag: 14.07.1998
(51) Int. Cl.: G01D 5/347, F16D 1/08

(54) **Winkelmesseinrichtung**
Angle measuring device
Dispositif pour mesurer des angles

(30) Priorität: 15.09.1997 US 929539
(43) Veröffentlichungstag der Anmeldung: 17.03.1999
(73) Patentinhaber: Dr. Johannes Heidenhain GmbH, 83292 Traunreut (DE)
(72) Erfinder: Setbacken, Robert, Santa Barbara, CA 93109-1614 (US); Goeden, Richard, Michael, Santa Barbara, CA 93101 (US)

(56) Entgegenhaltungen:
- DE-A- 2 354 902
- DE-A- 2 448 239
- US-A- 4 652 748
- US-A- 4 806 752

## Beschreibung

Die Erfindung betrifft eine Winkelmeßeinrichtung mit einer Welle, die radial aufspreizbar ist und dadurch in einer Bohrung einer Antriebswelle klemmbar ist.

Eine derartige Winkelmeßeinrichtung ist aus der US 4,652,748 bekannt. Sie besteht aus einem Gehäuse, in dem eine hohle Welle drehbar gelagert ist. An dieser Welle ist drehfest eine Codescheibe zur Messung der Winkelstellung der Welle gegenüber einer am Gehäuse angebrachten Abtasteinheit befestigt. Das eine Ende der Welle ist geschlitzt ausgeführt und weist eine konische Innenbohrung auf, an der die konische Spitze eines Stiftes angreift. Der Stift ist über eine am anderen Ende der Welle eingeschraubten Schraube axial verschiebbar, wodurch sich das geschlitzte Ende der Welle aufspreizt. Durch dieses Aufspreizen wird die Welle der Winkelmeßeinrichtung in einer Bohrung eines Teils einer Wellenkupplung oder direkt in einer Bohrung einer Motorwelle radial geklemmt. In allen Fällen ist die Welle der Winkelmeßeinrichtung über eine Wellenkupplung mit der Antriebswelle - z.B. Motorwelle - verbunden.

Eine ähnlich Winkelmeßeinrichtung ist in der DE 30 38 005 A1 beschrieben. Auch bei diesem Beispiel ist das der Antriebseinheit zugewandte Wellenende geschlitzt ausgeführt. Dieses Wellenende ist mittels eines Keiles auseinanderspreizbar. Der Keil besitzt ein Innengewinde, das mit dem Außengewinde einer Schraube zusammenwirkt. Der Kopf der Schraube stützt sich am Wellenende ab, so daß die Schraube selbst nicht axial verschiebbar ist. Durch Drehen der Schraube verlagern sich die Gewindeflanken der Schraube in axialer Richtung, was eine axiale Verschiebung des Keils und somit ein radiales Aufspreizen des geschlitzten Wellenendes bewirkt.

Alle bekannten Winkelmeßeinrichtungen haben den Nachteil, daß außer der Schraube noch weitere Elemente zum Aufspreizen erforderlich sind.

Der Erfindung liegt die Aufgabe zugrunde, eine Winkelmeßeinrichtung anzugeben, die einfach aufgebaut ist und bei der eine sichere und einfache Klemmung der Welle mit einer Antriebswelle ermöglicht wird.

Diese Aufgabe wird erfindungsgemäß durch die Merkmale des Anspruches 1 gelöst.

Vorteilhafte Ausführungsformen der Erfindung sind in den abhängigen Ansprüchen angegeben.

Die Erfindung wird anhand eines Ausführungsbeispiels näher erläutert. Es zeigen
- Figur 1: eine Winkelmeßeinrichtung im Schnitt und
- Figur 2: das Prinzip der Wellenklemmung.

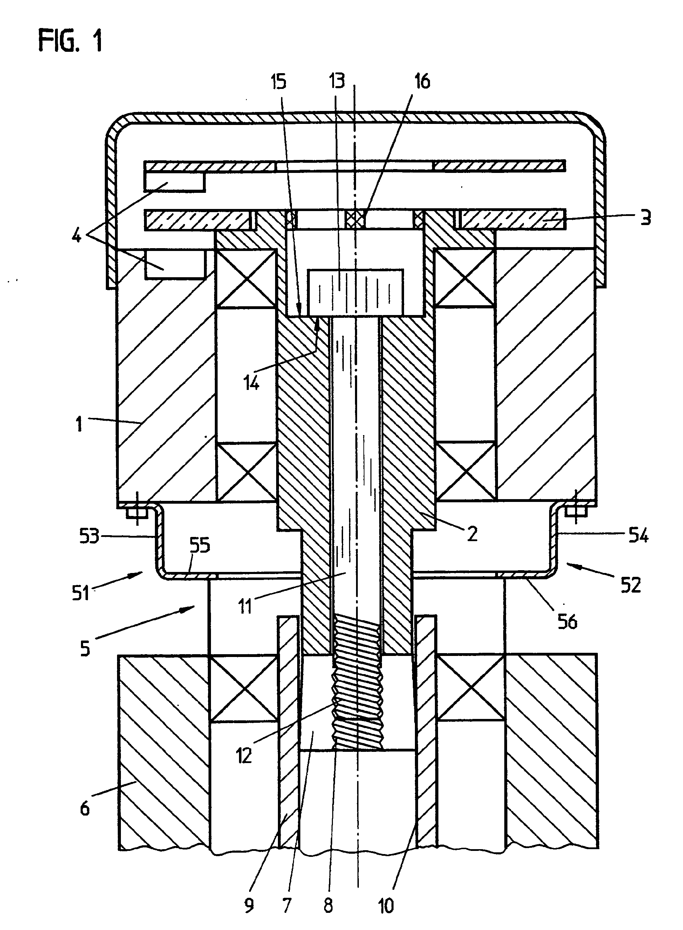

Die Winkelmeßeinrichtung in Figur 1 besteht aus einem Stator 1, in dem eine durchgehend hohle Geberwelle 2 drehbar gelagert ist. Am ersten Ende dieser Geberwelle 2 ist eine Codescheibe 3 befestigt, z.B. aufgeklebt. Eine auf der Codescheibe 3 aufgebrachte inkrementale oder absolute Codierung wird von einer Abtasteinheit 4 abgetastet, die positionsabhängige elektrische Signale abgibt.

Der Stator 1 ist über eine Kupplung 5 an einem stationären Teil 6 einer Antriebseinheit, beispielsweise eines Motors befestigt. Die Kupplung 5 gewährleistet eine drehfeste Verbindung des Stators 1 und des stationären Teils 6, läßt aber Ausgleichsbewegungen zwischen diesen beiden Teilen 1 und 6 in allen anderen Richtungen zu. Eine in Drehrichtung besonders steife und spielfreie Kupplung 5 ist in Figur 1 dargestellt. Sie besteht aus Federblech mit mehreren Blattfederarmen 51 und 52. Jeder Blattfederarm 51, 52 besitzt einen axial verlaufenden Bereich 53, 54 und einen senkrecht dazu verlaufenden radialen Bereich 55, 56. Die axial verlaufenden Bereiche 53, 54 bilden ein Federparallelogramm und erlauben radiale Ausgleichsbewegungen zwischen dem Stator 1 und dem Teil 6, welche zwangsläufig durch Exzentrizitäten auftreten. Die radial verlaufenden Bereiche 55, 56 erlauben dagegen axiale Ausgleichsbewegungen. Eine derartige Kupplung ist beispielsweise in der DE 89 15 109 U1 beschrieben.

Das der Antriebseinheit zugewandte zweite Ende der Geberwelle 2 besitzt axial verlaufende Schlitze 7 und ein Innengewinde 8. Soll die Geberwelle 2 drehfest mit einer Antriebswelle 9 verbunden werden, so wird das geschlitzte zweite Ende der Geberwelle 2 in eine Bohrung 10 der Antriebswelle 9 eingeschoben und der geschlitzte Bereich der Geberwelle 2 radial aufgespreizt, wodurch eine stabile radiale Klemmung erzielt wird. Zum Aufspreizen dient eine Schraube 11, welche am zweiten Ende ein Außengewinde 12 und am ersten Ende einen Kopf 13 aufweist. Die Schraube 11 wird vom ersten Ende der Geberwelle 2 ausgehend in die hohle Geberwelle 2 eingeschraubt, bis sich die radial verlaufende Fläche 14 der Schraube 11 an einem Absatz mit einer ebenfalls radial verlaufenden Fläche 15 der Geberwelle 2 abstützt. Die Flächen 14 und 15 bilden einen axial wirksamen Anschlag, bis zu welchem die Schraube 11 in die Geberwelle 2 einschraubbar ist.

Wird die Schraube 11 nach Erreichen des Anschlags relativ zur Geberwelle 2 weiterverdreht, so bewirken die Gewindeflanken des Außengewindes 12 und des Innengewindes 8 ein Aufspreizen des geschlitzten Endes der Geberwelle 2.

Soll bei dem Klemmvorgang zwischen Geberwelle 2 und Antriebswelle 9 ein Verdrehen der Codescheibe 3 vermieden werden, so können an der Geberwelle 2 Mittel 16 vorgesehen sein, mit denen die Geberwelle 2 beim Verdrehen der Schraube 11 drehfest gehalten werden kann. Diese Mittel 16 können besonders geformte Ausnehmungen an der Geberwelle 2 sein, welche mit einem Werkzeug zugänglich sind. Dieses Werkzeug kann bei der Montage von Hand gehalten werden, es kann aber auch so ausgebildet sein, daß es selbständig während der Montage der beiden Wellen 2 und 9 eine Klemmung zwischen der Geberwelle 2 und dem Stator 1 bewirkt.

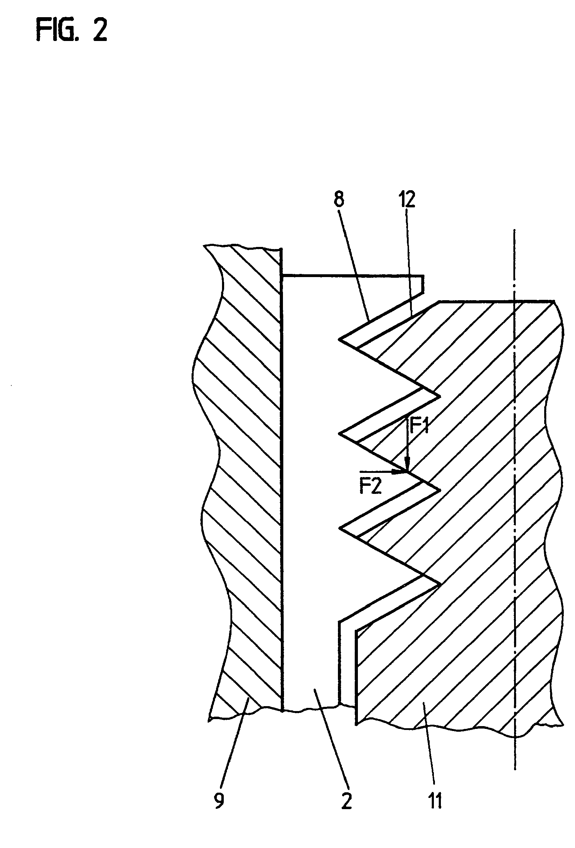

In Figur 2 ist das Prinzip der radialen Klemmung der Geberwelle 2 gemäß Figur 1 vergrößert dargestellt. Ist die Schraube 11 bis zum Anschlag 14, 15 in die Geberwelle 2 eingedreht, wird die Fläche 14 des Schraubenkopfes 13 an die Fläche 15 der Geberwelle 2 gepreßt. Durch Weiterdrehen der Schraube 11 tritt in der Schraube 11 eine Längskraft F1 an den Gewindeflanken auf. Die Gewindeflanken sind zur Richtung dieser Längskraft F1 geneigt, beim metrischen Gewinde um 30°. Durch die zur Längskraft F1 schrägen Berührungsflächen der Gewindeflanken des Innengewindes 8 und des Außengewindes 12 entsteht eine Abtriebskraft, welche versucht, die Gewindeflanken gegeneinander zu verschieben. Die Längskraft F1 wird dadurch in eine Radialkraft F2 umgewandelt, welche das geschlitzte Ende der Geberwelle 2 radial verschiebt, und an die Innenwand der Bohrung 10 der Antriebswelle 9 drängt.

Die Flächen 14 und 15 bilden einen axial wirksamen Anschlag, bis zu welchem die Schraube 11 in die Geberwelle 2 einschraubbar ist. Weiterhin bilden die sich berührenden Flächenbereiche 14, 15 im geklemmten Zustand der Geberwelle 2 relativ große Reibflächen, welche auf einem relativ großen Radius liegen, so daß ein großes Losdrehmoment aufgrund der Reibung erreicht wird. Dies hat den Vorteil, daß sich die Klemmung im Betrieb nicht selbständig lösen wird.

## Patentansprüche

1. Winkelmeßeinrichtung mit einer Codescheibe (3) zur Messung der Winkelposition der Geberwelle (2) und einer Klemmvorrichtung zur drehfesten Klemmung der Geberwelle (2) mit der Antriebswelle (9) einer Antriebseinheit (6), wobei die Geberwelle (2) im Klemmbereich axiale Schlitze (7) aufweist und mittels eines Betätigungselementes (11) radial auseinanderspreizbar ist, **dadurch gekennzeichnet, daß**
- das Betätigungselement eine in der Geberwelle (2) drehbare Schraube (11) ist, welche im Klemmbereich ein Außengewinde (12) aufweist,
- die Geberwelle (2) im Klemmbereich ein korrespondierendes Innengewinde (2) aufweist und
- die Schraube (11) eine axial wirkende Anschlagfläche (14) besitzt, mit der sie sich an einem axialen Anschlag (15) der Geberwelle (2) während der Klemmung abstützt.

2. Winkelmeßeinrichtung nach Anspruch 1, **dadurch gekennzeichnet, daß** die Schraube (11) von dem der Antriebswelle (9) entgegengesetzten Ende durch die hohle Geberwelle (2) geführt ist und das der Antriebswelle (9) zugewandte Ende der Geberwelle (2) die Schlitze (7) aufweist.

3. Winkelmeßeinrichtung nach Anspruch 1, **dadurch gekennzeichnet, daß** die Geberwelle (2) in einem Stator (1) der Winkelmeßeinrichtung drehbar gelagert ist, und daß der Stator (1) mit dem stationären Teil (6) der Antriebseinheit mittels einer Kupplung (5) drehstarr aber radial und axial nachgiebig verbunden ist.

4. Winkelmeßeinrichtung nach Anspruch 3, **dadurch gekennzeichnet, daß** die Kupplung (5) aus Federblech mit axial und parallel zueinander verlaufenden Federarmen (53, 54) besteht, welche eine verdrehsteife Parallelführung bilden.

## Claims

1. Angle measuring device with a coded disc (3) for measuring the angular position of the encoder shaft (2) and a clamping device for clamping the encoder shaft (2) to the drive shaft (9) of a drive unit (6) in a manner fixed against rotation, wherein the encoder shaft (2) has axial slots (7) in the clamping region and can be spread radially apart by means of an operating element (11), **characterised in that**
• the operating element is a rotatable screw (11) in the encoder shaft (2), which has an external thread (12) in the clamping region,
• the encoder shaft (2) has a corresponding internal thread (2) in the clamping region, and
• the screw (11) has an axially acting stop surface (14), with which it is supported against an axial stop (15) of the encoder shaft (2) during clamping.

2. Angle measuring device according to Claim 1, **characterised in that** the screw (11) is guided through the hollow encoder shaft (2) from the end opposite the drive shaft (9) and the end of the encoder shaft (2) facing the drive shaft (9) has the slots (7).

3. Angle measuring device according to Claim 1, **characterised in that** the encoder shaft (2) is rotatably disposed in a stator (1) of the angle measuring device, and that the stator (1) is connected to the stationary part (6) of the drive unit by means of a coupling (5) to be rigid to rotation but radially and axially flexible.

4. Angle measuring device according to Claim 3, **characterised in that** the coupling (5) is made of spring steel sheet with spring arms (53, 54), which extend axially and parallel to one another and form a parallel guidance rigid to relative rotation.

## Revendications

1. Dispositif de mesure d'angles comportant un disque codeur (3) pour la mesure de la position angulaire de l'arbre de capteur (2) et un dispositif de serrage pour lier de manière rigide en rotation l'arbre de capteur (2) à l'arbre d'entraînement (9) d'une unité d'entraînement (6), l'arbre de capteur (2) présentant dans la zone de serrage des fentes (7) axiales et pouvant être expansé radialement à l'aide d'un élément d'actionnement (11), **caractérisé par le fait**
- **que** l'élément d'actionnement est une vis (11) montée tournante dans l'arbre de capteur (2), qui présente un filetage extérieur (12) dans la zone de serrage,
- l'arbre de capteur (2), présente un filetage intérieur (2) correspondant dans la zone de serrage,
- la vis (11) comporte une surface de butée (14) axiale, par l'intermédiaire de laquelle elle prend appui lors du serrage sur une butée (15) axiale de l'arbre de capteur (2).

2. Dispositif de mesure d'angles selon la revendication 1, **caractérisé par le fait que** la vis (11) est introduite dans l'arbre de capteur (2) creux depuis l'extrémité opposée à l'arbre d'entraînement (9) et que l'extrémité de l'arbre de capteur (2) tournée vers l'arbre d'entraînement (9) porte les fentes (7).

3. Dispositif de mesure d'angles selon la revendication 1, **caractérisé par le fait que** l'arbre de capteur (2) est monté tournant dans un stator (1) du dispositif de mesure d'angles et que le stator (1) est lié de manière rigide en rotation, mais de manière flexible dans les directions axiale et radiale, à la partie stationnaire (6) de l'unité d'entraînement au moyen d'un accouplement (5).

4. Dispositif de mesure d'angles selon la revendication 3, **caractérisé par le fait que** l'accouplement (5) est réalisé en tôle à ressort, avec des bras élastiques (53, 54) mutuellement parallèles, qui s'étendent dans la direction axiale et forment un guide parallèle rigide en torsion.
